# EUROPEAN PATENT APPLICATION

(11) **EP 3 996 403 A1**
(43) Date of publication of application: **11.05.2022**
(21) Application number: 20206650.2
(22) Date of filing: 10.11.2020
(51) Int. Cl.: H04W 12/06, H04L 29/06

(54) **AUTHENTICATION SYSTEMS AND METHODS**

(71) Applicant: CAP Certified Limited, London, Greater London N1 7GU (GB)
(72) Inventor: The designation of the inventor has not yet been filed
(74) Representative: ip21 Ltd

(57) **Abstract**

Systems and methods that can be used for precisely validating online child users are presented. The current invention will enable online applications such as Social Media to securely and reliably enable child-related safety measures, without having to store or analyse sensitive Personally Identifiable Information (PII). The system generates secure digital tokens that do not contain personal information and communicate the token between a series of systems in order to communicate the authenticity of an online child user. Further, the sequence and standard disclosed herein define a unique protocol that can be secure and scalable.

## Description

### Background

Social media, gaming, chat, browser and other Digital Platforms are becoming the "new norm" of communication, entertainment and social interactions. As a consequence, Digital Platforms have become rich feeding grounds for predators, groomers, bullies and scammers. Often, children are left to their own devices as parents are struggling to keep up with the sheer scale and rapid changes.

Key to protecting children on Digital Platforms is to identify children so that Digital Platforms can adhere to Age Appropriate Design Code, add extra security and other constraints such as limiting access to inappropriate content, or even restrict communications and associations with other users (strangers and unverified users) within the platforms, for example where a child has given the consent to do so through the parent.

Existing mechanisms of identifying children include collecting age-related information at the time of registration to the platform, analysing images (i.e. face recognition), analysing behavioural patterns on Digital Platforms etc. However, these known approaches do not always identify children effectively due to false information which may be provided by the user or because of errors which are introduced in automated procedures while generating user identities. Furthermore, collecting reliable data sometimes raises privacy concerns or can become too invasive.

Aspects of the present invention seek to address the aforesaid problems. In particular, aspects of the present invention seek to provide more secure, reliable and flexible authentication mechanisms to be integrated with any Digital Platform in order to provide protection to child users.

### Summary of the Invention

In an independent aspect, there is provided an authentication method for a user, the method comprising the steps of:
generating a user authentication request, the user authentication request comprising user validation data to validate the user;
providing identifier data for the validated user based on the validation data;
using the identifier data, generating a temporary token having a time period of expiry, the temporary token representing the authenticated user;
sending the temporary token to an external system comprising a login unit;
upon successful login, using the temporary token to generate a permanent token for the authenticated user. For example, the user may be a parent or a carer.

Advantageously, by issuing digital tokens in this manner (representing messages exchanged between system modules), the method according to the invention represents a secure, reliable and flexible enough solution that can be integrated with any external system representing a digital platform and hence provide protection to child users.

Accordingly, the tokens employed by aspects of the present invention represent functional data used to control the operation of the systems and devices processing the data. The manner in which this information is processed enables the control unit to reliably authenticate a user which in turn leads to a more secure system and method.

The first, temporary, token, is referred to as a CAP Integration token representing the authenticated user. The CAP Integration token is a 'temporary' token, meaning that the token is generated with a preset limited period of time (expiry period). The second token, referred to as a CAP External token, is a permanent token which may then be used by the external system to create a link (with the present system) that can then be used to authenticate a user such as a child following login, e.g. to refer back the authenticity of the user if necessary.

Advantageously, the validation data is separate from the identifier data and they are matched for a child user, enhancing privacy. For example, the validated data can relate to data stored in a database of a child's school. For example, validation data can comprise a user child date of birth, child name, a unique code of the school the child is attending and parent email address. The information mentioned before is used by a selected set of users accessing a school portal.

In a dependent aspect, the identifier data comprises an identification token referred to as a CAP Child token. That is, the CAP Integration token may be linked to a CAP Child token which is used for integration of a child user with external systems representing a digital platform such a social media platform.

In a dependent aspect, the identification token is of a plurality of identification tokens for the user maintained in a token database, the plurality of identification tokens being uniquely and randomly distributed.

In another independent aspect, there is provided a system for authenticating a user, the system comprising:
a control unit for receiving a user authentication request, the user authentication request comprising user validation data to validate the user;
a first database for storing identifier data for the validated user, wherein the identifier data is matched to the validation data;
the control unit configured to: generate a temporary token having a time period of expiry, the temporary token; send the temporary token to an external system comprising a login unit; and when the user logs in to the login unit, use the temporary token to generate a permanent token.

Advantageously, the permanent token may be used by the external system to refer back to the present system. The user may be validated manually or automatically. For example, selected authorized personnel from schools to perform the validation. In preferred embodiments, the database maintains and matches the validation data with identification data. For example, the identification data comprises minimum information such as a child data of birth and corresponding parent email addresses which may be collected from Information Management Systems or other authoritative systems linked to schools. Since the database only stores minimum information, the child data is anonymous which provides a significant advantage in privacy considerations.

In a dependent aspect, the control unit comprises (and maintains) a token database for storing the temporary token and the permanent token.

In a dependent aspect, the system further comprises an authentication module for automatically validating the user. This may be advantageous for example over manual authorisation using an authorised personnel.

In a dependent aspect, the system further comprises a backend unit for receiving the authentication request from a user device and transmitting the authentication request to the control unit. For example, the user device may be a parent mobile device.

### Detailed Description

Exemplary embodiments of the invention will now be described in reference to the accompanying drawings, in which:
Figure 1 schematically shows an example of an authentication system;
Figure 2 is a flow diagram to schematically show an authentication method with token generation;
Figure 3 shows a sequence diagram for integration of a digital platform.

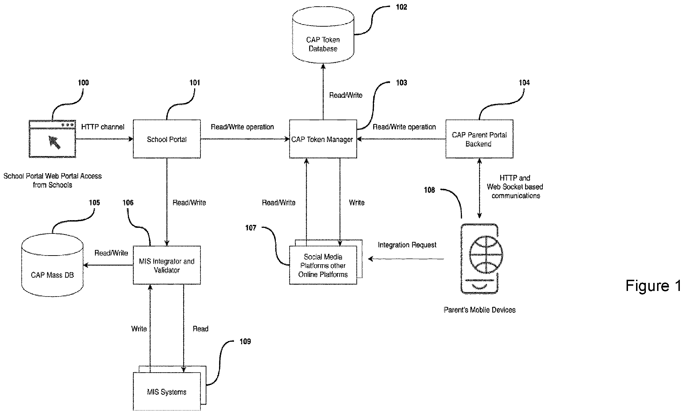

Figure 1 is an exemplary implementation of an authentication system using a computer network. In this example, the system maintains communication between a software module 100 which may be used by a school web portal, a Digital Platform 107 (e.g. one or more of a social media platform or other online platforms) and software device applications 108 which may be run on devices owned by parents. The devices may be a mobile phone device, tablet, laptop or any other suitable connected devices.

The software module 100 includes a web portal access protocol to a school portal software application 101, e.g. using a HTTP channel. Communication of data is managed by an authentication unit 103 used to manage tokens. This represents a controller referred herewith as a control unit 103 (the "CAP Token Manager") from which other components of the system can read data such as data containing information related to children. Data is stored and communicated over securely encrypted channels where the identity of a child is represented as a token hereinafter referred to as a "CAP Child Token". The data is uniquely and randomly distributed, meaning that tokens may be in a sequence such that it is not possible to derive the rest of the tokens by knowing one or a few tokens, increasing security.

The device application 108 may be accessed by parents and communicates with a backend unit 104 (the "CAP Parent Portal Backend"), through a secure channel (e.g. HTTP and web socket based communications). The backend unit 104 stores data containing information provided by parents or carers.

Using the device, parents can make an authentication request hereinafter referred to as Child Authentication Request (CAR) on behalf of their individual child. The CAR message (i.e. signal) is sent to the control unit 103 via the backend unit 104. The control unit 103 comprises a storage unit or database for storing data.

To validate the CAR, the CAR may be processed manually through the software module 100, by an authorised personnel (e.g. administrators) of the corresponding school of the child. Alternatively, the CAR may be processed automatically through an authentication module 106 ("the Management Information Systems, MIS, Integrator and Validator") based on data stored on a database 105 (the "CAP Mass Database"). Every operation related to CAR may be updated by the control unit 103 with the corresponding parent information.

A CAR message comprises user data containing information for identifying a child. The information is entered via a device application 108, by the parent, at the time of CAR creation. To make CAR identifiable to authorised personnel using software module 100, additional information may, optionally, also be included in the CAR. The minimum required data of a CAR that is used to verify a child identity is referred to as CAR Necessary Information (CARNI). The optional information captured in CAR for the purpose of identifying a child by authorised personnel is hereinafter referred to as CAR Optional Information (CAROI). CARNI may include for example a parent's email address (e.g. derived from the parent profile where the CAR is originated), the birthday of the child and school id (a unique id assigned to identify schools with access to software module 100). CAROI may include a parent name (derived from the parent profile where the CAR is originated) and a child's name.

Upon the approval or decline of a CAR, the corresponding parent may be notified for example through an email, an SMS or any suitable notification of the device application 108. In the case of CAR approval, a CAP Child Token is generated and stored in the control unit 103. The control unit 103 then matches the CAP Child Token to be linked with the parent profile information stored in the control unit 103. The parent profile information is communicated to the control unit 103 by the backend unit 104 at the time of parent registration, which occurs prior to any CAR.

The software module 100 may be accessed by authorised personnel at schools via a secure channel linked to the school portal software application 101, that stores data provided by the software module 100. Preferably, every newly created CAR reference stored in the control unit 103 is read by the school portal software application 101 periodically. From every CAR read from the control unit 103 by the school portal software application 101, CARNI is extracted and sent to the authentication module 106, to check for validity.

If the authentication module 106 outputs a valid response, the school portal software application 101 notifies the control unit 103 (e.g. with CAR reference) that the CAR is accepted. In the scenario of the authentication module 106 failing to validate the CAR, the school portal software application 101 notifies the authorised users of the software module 100, who belongs to the school referred by the school id in the corresponding CARNI. As a result, authorised users who received the notification can cross-check the school references and accept or refuse the CAR when the school portal software application 101 notifies the CAR acceptance or refusal to software 103. The backend unit 104 reads the CAR status from the control unit 103 and then communicates to corresponding parents via their device application 108.

The authentication module 106 validates the CAR based on the data available at database 105 and communicates to synchronise with other systems which may represent third-party software applications 109 ("Management Information Systems / MIS systems"). Schools in many countries keep a track of students and their parent contacts in Management Information Systems (MIS) or similar systems for effective communication as well as internal management. For example, the authentication module 106 can connect to these MIS systems 109 through their own protocol, upon receiving access permission from corresponding school's management.

The MIS systems 109 can optionally write to authentication module 106 in the case of new information available. For example, the authentication module 106 extracts data comprising parent email address and child birthday from the information received from systems 109 and update database 105. As described before, the authentication module 106 can respond to CARNI extracted from CAR by matching the records of the database 105. Since the database 105 only stores parent email addresses with child birthdays, the child data is anonymous which provides a huge advantage in privacy considerations.

The control unit 103 can act as token storage which maintains the relationship between entities that are essential for child authentication and validation process. The tokens stored in the control unit 103 are generally referred to as CAP tokens and may be further specified with a suffix that suits the entity that is represented by the CAP token. One such exemplary token name is CAP Child Token, which is used to identify an authenticated child. The following is a list of examples of CAP tokens that can be maintained:
1. CAP Child Token: Represents a verified child
2. CAP Parent Token: Represents a parent who is a registered user in the device application 108
3. CAP School Token: Represents schools which are given access to software module 100
4. CAP External Token : An alias token of CAP Child Token, that is known to Digital Platforms who use child identity.

What we mean by alias is that the CAP External token looks different from the CAP Child Token but has the same meaning as CAP Child Token. The reason to do that is as follows. Ideally the CAP Child Tokens would be shared with the external party. But consider a situation where the CAP Child token is shared with two external parties. If the two parties can talk to each other by separate means, one can derive the digital profile in party 1 (or digital platform 1) refers to the same child as the digital profile in party 2 (or digital platform 2). In another words, through a CAP Child Token itself, unnecessary privacy information may be shared to the external world if the CAP Child Token was shared with external party. To address this problem, two aliases are created for the same CAP Child Token. These aliases are tokens but look very different from each other while referring to the same CAP Child Token. Advantageously, the external systems cannot derive the fact that these two CAP External tokens are coming from the same origin or they are aliases of the same identity.

Additionally, a database 102 can provide storage for the tokens created by the control unit 103 with all the necessary relationships between each other and the necessary information. The database 102 is queried by the control unit 103 upon triggers including the API requests received from the school portal software application 101, the backend unit 104 and the Digital Platform software 107.

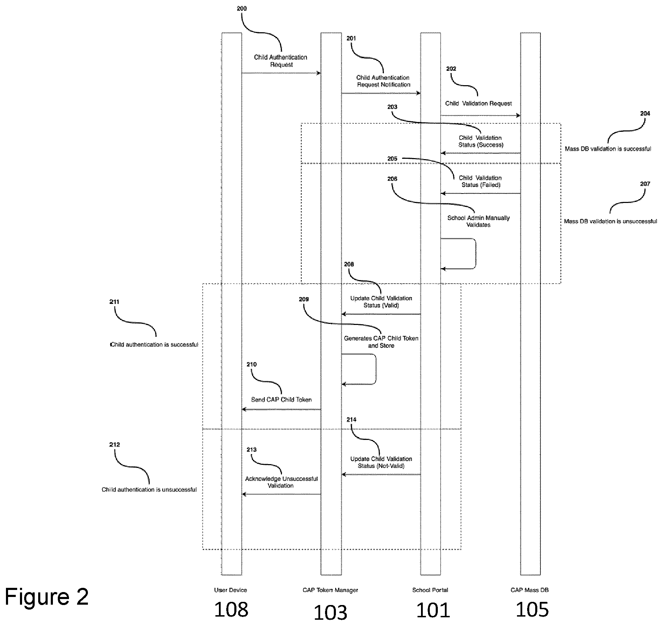

Figure 2 schematically represents a process of CAP Child Token generation by the system described above with reference to Figure 1. This exemplary method involves verifying a child identity and generating a digital token linked to the child's identity (a CAP child Token).

At step 200, parents who have access to devices 108 can generate a CAR signal for their children to be verified. The CAR is received by the control unit 103 via the communication path including the backend unit 104. Next, at step 201, a CAR notification message corresponding to the CAR is received by the school portal software application 101. Then, at step 202, a CARNI message is sent for validation, in this example to the authentication module 106, e.g. using the database 105.

Step 204 represents a scenario where the validation is successfully done by the authentication module 106 and at step 203, a message with the validation result is received by the school portal software application software 101. Step 207 represents a scenario where the authentication module 106 fails to validate corresponding CARNI received via 202. In such scenarios, at step 206, an authorised personnel from the school accessing 100 determines the validity of CAR (manual validation).

Upon completion of the CAR validation through either step 204 or step 207, the activity sequence follows one of the paths defined by steps 211 or 212. Step 211 corresponds to successful CAR validation and step 212 corresponds to rejection of not receiving approval for the CAR.

In the case of step 211, a validation status message (update child validation status 208), corresponding to CAR 200, is received by the control unit 103. Preferably immediately after, the control unit 103 generates a CAP Child Token and stores it in the database 102 (step 209). Finally, at step 210, the CAP Child Token is received via a message by the device 108. In preferred embodiments, this is sent to the parent using device 108, as a notification indicating a validated child identity.

In the case of step 212, a child validation status message is issued (step 214), carrying CAR rejection, corresponding to CAR 200, is received to software 103. As a result, at step 213, a message is received by the device 108, which will preferably be displayed as a notification to the parent user accessing device 108.

The trail of messages may be recorded in control unit 103, where the relations between messages are preferably identified by unique tokens.

Advantageously, enabling protection in digital platforms for child profiles happens after letting the digital platform know the validity of the child profile. This information is passed to digital platforms after authenticating the user (child user) from both ends. An authentication process from a digital platform end can happen in multiple ways according to the application.

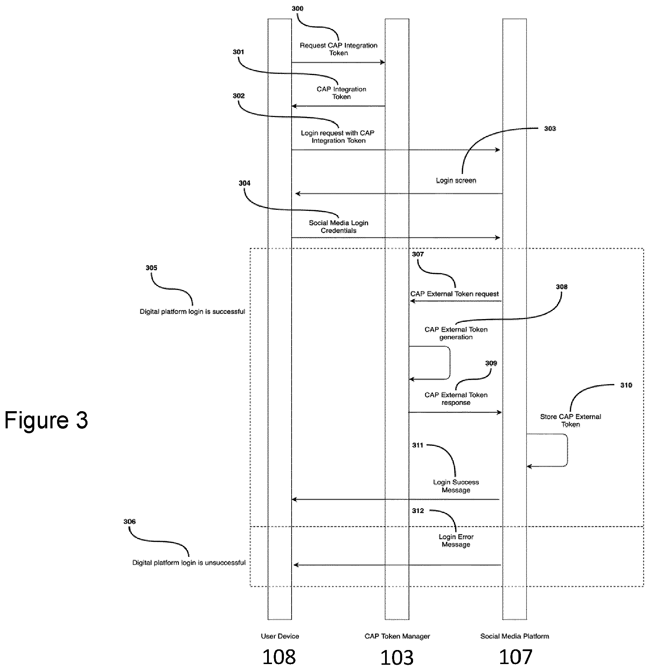

With reference to Figure 3, at step 300, a message comprises a request to generate a unique random token from the control unit 103 (Request CAP Integration Token), for example when parents access a device 108 and choose the integration token generation option under a selected child profile (which are previously validated through the process in Figure 2). This token is referred to as a CAP Integration Token. After processing this request, the control unit 103 generates a random token with a limited lifespan (of e.g. 5 minutes) and at step 301, the corresponding device 108 receives this temporary token via message 301. Accordingly, the temporary token has a period of time in which it expires (expiry period) which may be preset. This temporary token is also linked to an issued CAP Child Token related to the selected child (which has been validated and authenticated according to the process described with reference to Figure 2).

In Figure 3, steps labelled as 302, 303 and 304 depict one of many exemplary login processes of a digital platform. Message 302 (Login request with CAP Integration Token) represents a login request to a digital platform with the temporary CAP Integration Token received via step 301. This temporary token can be embedded to a URL or embedded in a message body or message header of the message 302 in a way that can be read by digital platform 107. In this example, message 303 (login screen) comprises information related to generating a login screen for the digital platform 107 either via a web interface or any other user interface. The child enters the credentials via parent's device 108 in order to be authenticated by the digital platform 107. The login request is represented at step 304 (Social Media Login Credentials) which will result in either successful login or unsuccessful login.

A successful login to the digital platform 107 is represented at step 305 and the unsuccessful login is represented by 306. In the occurrence of 305 (successful login), the CAP External Token Request, message 307, is sent to the control unit 103 from the digital platform 107, embedding the temporary CAP Integration Token received at step 302. As a result, a unique, permanent token is generated by the control unit 103 and linked to the corresponding CAP Child Token. This permanent token is referred to as CAP External Token 308, and is sent back to the corresponding digital platform 107 at step 309 (as the CAP External Token response message). The issuance of the second, permanent, token (the CAP External token) to the external software application occurs within the expiry period of the first, temporary token (the CAP Integration Token) before its expiry period.

Sending the response message 309 is followed by followed by step 310 (Store CAP External Token), which represents storing CAP External Token by digital media 107 and linking the token with a profile identifier inside the digital platform 107. A login message 311 (Login Success Message) represents the completion of the process and a relevant notification is generated at device 108 confirming the consent given by the child user who originated the login request 302.

An unsuccessful login is represented at step 306 and results in a login error message 312. This is presented to the child user who originated the request 302 through device 108.

It will be appreciated that in the present disclosure, the depiction of a given element or consideration or use of a particular element number in a particular figure or a reference thereto in corresponding descriptive material can encompass the same, an equivalent, or an analogous element or element number identified in another figure or descriptive material associated therewith.

It will also be appreciated that the detailed embodiments of the current invention depicted herein are merely exemplary. They are not limited to the specific structure or details disclosed herein while serving the purpose of supporting current claims presented herein and further providing guidance to one skilled in the art to employ the present invention virtually in any form of detailed structure. Further, the terms and the phrases used herein shall not be limited but used to describe the present invention in an understandable manner. In a number of instances, known systems, methods, procedures, and components have not been described in detail so as to not unnecessarily obscure aspects of the embodiments of the present disclosure.

## Claims

1. An authentication method for a user, the method comprising the steps of:
generating a user authentication request, the user authentication request comprising user validation data to validate the user;
providing identifier data for the validated user based on the validation data;
using the identifier data, generating a temporary token having a time period of expiry, the temporary token representing the authenticated user;
sending the temporary token to an external system comprising a login unit;
upon successful login, using the temporary token to generate a permanent token for the authenticated user.

2. An authentication method according to claim 1, where the identifier data comprises an identification token.

3. An authentication method according to claim 2, wherein the identification token is of a plurality of identification tokens for the user maintained in a token database, the plurality of identification tokens being uniquely and randomly distributed.

4. A system for authenticating a user, the system comprising:
a control unit for receiving a user authentication request, the user authentication request comprising user validation data to validate the user;
a first database for storing identifier data for the validated user, wherein the identifier data is matched to the validation data;
the control unit configured to: generate a temporary token having a time period of expiry, the temporary token; send the temporary token to an external system comprising a login unit; and when the user logs in to the login unit, use the temporary token to generate a permanent token.

5. A system according to claim 4 wherein the control unit comprises and maintains a second database for storing the temporary token and the permanent token.

6. A system according to claim 4 or claim 5, further comprising an authentication module for automatically validating the user.

7. A system according to any of claims 4 to 6, further comprising a backend unit for receiving the authentication request from a user device and transmitting the authentication request to the control unit.
